# EUROPEAN PATENT SPECIFICATION

(11) **EP 2 502 859 B1**
(45) Date of publication and mention of the grant of the patent: **13.02.2013**
(21) Application number: 12159918.7
(22) Date of filing: 16.03.2012
(51) Int. Cl.: B65G 47/26, A21C 9/08

(54) **A dough conveying device.**
Teigtransportvorrichtung
Dispositif pour transporter de la pâte

(30) Priority: 24.03.2011 IT VR20110057
(43) Date of publication of application: 26.09.2012
(73) Proprietor: ING. POLIN & C. S.p.A., 37135 Verona (IT)
(72) Inventor: Solfa, Matteo, 37135 Verona (IT)
(74) Representative: Lissandrini, Marco

(56) References cited:
- EP-A1- 1 803 352
- GB-A- 993 998
- NL-A- 9 002 487
- US-A- 2 545 667
- US-A- 3 860 232
- US-A- 4 632 378

## Description

The object of this invention is a food dough conveying device.

In particular, the invention is applied preferably to the field of food dough processing but it might also be applied to processing fields where objects must be conveyed.

More specifically, in the processing of a food dough, the dough is shaped (by specific forming machines) and then cut (by specific dough dividers) into a plurality of pieces, depending on the product being made (for example, bread, pasta and so on).

In this context, after the dough has been cut, the pieces obtained must be conveyed from an infeed station, located at a dividing machine, to an outfeed station, located at a specific machine which operates on the cut pieces in such a way as to produce the end product.

In particular, in some cases, the cut pieces, once they reach the outfeed station, must be spaced from each other. In effect, the machine which operates on the cut pieces requires the pieces to be spaced from ech other so that each piece can be worked without interfering with the others.

In other cases, the pieces need not be spaced and it is sufficient for them to be conveyed from one station to another.

In accordance with the prior art, a food dough can be conveyed from the infeed station to the outfeed station using a conveying device having a frame which extends between an infeed portion, located at the infeed station (where the cut dough enters) and an outfeed portion, located at the outfeed station (where the dough exits).

The device also comprises two rollers which are rotatably mounted on the frame at the infeed portion and at the outfeed portion, respectively. Each roller is rotatable about a respective axis of rotation and extends longitudinally along the axis of rotation.

Trained around the rollers there is a plurality of belts whose tops define a sliding conveyor table for transporting the pieces of dough.

In particular, each roller is provided with a plurality of grooves around which the belts are trained. More specifically, each groove runs all the way round the outside surface of the roller to define a circle. Thus, the grooves of each roller are distributed along the longitudinal extension of the roller and the respective circles lie in planes which are parallel to each other. That way, the belts combine to form a mobile table on which the pieces of dough are transportted.

In a first operating condition, when it is not necessary to space out the pieces, the belts are parallel and are looped around the rollers at the grooves in such a way that the respective circles lie in the same plane.

In a second operating condition, when it is necessary to space out the pieces, the belts are at least partly divergent and are looped around the rollers at the grooves in such a way that the respective circles lie in different planes. In other words, the belts diverge from each other starting from the roller located at the infeed portion of the frame until reaching the roller at the outfeed portion of the frame. In other words, again, the spacing between one belt and another varies from one roller to the other.

That way, starting from the infeed station, the pieces are conveyed along different directions in such a way that when they reach the outfeed station they are spaced from each other.

This prior art technique, however, has certain disadvantages.

In particular, to pass from the first operating condition to the second, the belts must be moved along the roller which is mounted at the outfeed end of the frame. More specifically, in order to move a belt, it must be elastically stretched and moved into another groove, as required.

Otherwise, it is necessary to detach the roller from the frame, move the belts to the required grooves and reattach the roller to the frame.

These operations are usually done by hand, with all the waste of time and money that this involves. In effect, passing from the first operating condition to the second means stopping production and waiting for an operator to move the belts to the correct position.

Another disadvantage is due to the fact that it is often necessary to keep the same belt spacing while the conveyor is in the second operating condition. In this context, it is often difficult to position the belts at the same spacing. Indeed, when the belts are passed from the first operating condition to the second, it often happens that the operator places the belt in the wrong groove since the grooves are side by side and close to each other.

US 4 632 378 A1 discloses a conveying device according to the preamble of claim 1.

In this conveying device, the arrangement of the belts is done mechanically : a roller containing several groove sections rotates. Each support of each belt bears a pin that moves into those grooves. The movement of the pin generates the movement of the support of the belt.

Such a system has however a limited flexibility because not many combinations of arrangement of the belts are possible.

In this situation, this invention has for an aim to provide a food dough conveying device which offers more flexibility in terms of possible arrangements of the belts.

This aim is achieved by the conveying device of claim 1.

Further features of the invention and its advantages are more apparent from the detailed description which follows of a preferred nonlimiting example embodiment of a food dough conveying device illustrated in the accompanying drawings, in which:
Figure 1 illustrates a food dough conveying device according to the invention in an axonometric view from above;
Figure 2 illustrates the food dough conveying device of Figure 1 in an axonometric view from below;

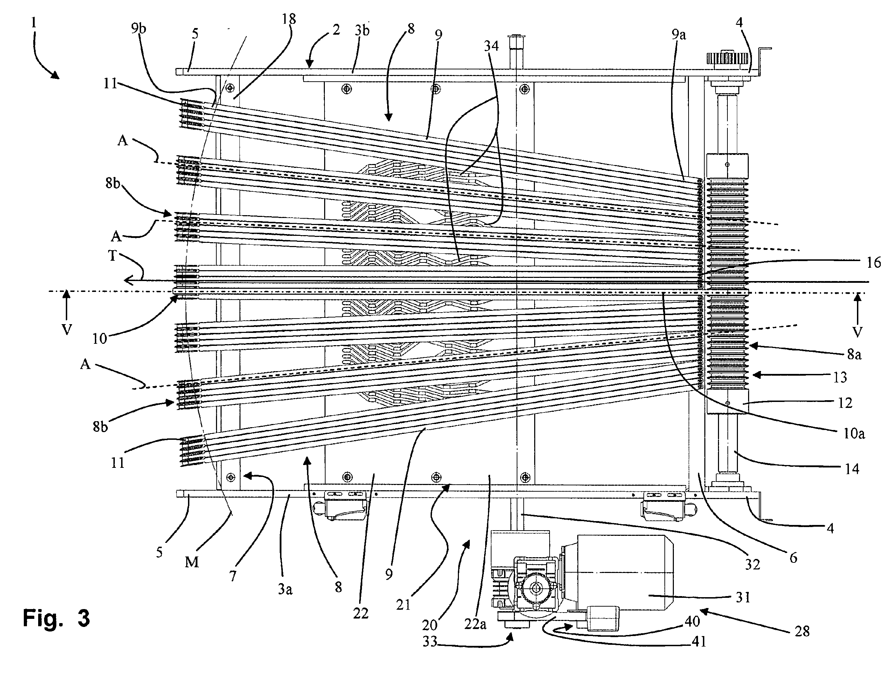

Figure 3 illustrates the food dough conveying device of Figure 1 in a plan view from above;
Figure 4 illustrates the food dough conveying device of Figure 3 in a plan view from above, with some parts cut away in order to better illustrate others;
Figure 5 illustrates the food dough conveying device of Figure 3 in a cross section through the section line V-V;
Figure 6 illustrates the food dough conveying device of Figure 1 in a plane side view;
Figure 7 is a schematic top view illustrating the food dough conveying device of Figure 1 in a first operating configuration;
Figure 8 is a schematic top view illustrating the food dough conveying device of Figure 7 in a second operating configuration; and
Figure 9 is a schematic top view illustrating the food dough conveying device of Figure 7 in a third operating configuration.

With reference to the accompanying drawings, the numeral 1 denotes in its entirety a food dough conveying device according to this invention.

The food dough conveying device 1 comprises a mounting frame 2 defining a base plane and extending at least along a conveying direction T. In the preferred embodiment illustrated in the accompanying drawings, the mounting frame 2 comprises a first bar 3a and a second bar 3b, each having a principally longitudinal extension parallel to the conveying direction T. In other words, the bars 3a, 3b are parallel to each other. In addition, each bar 3a, 3b extends from a respective first end 4 to a respective second end 5.

In this description, the base plane is defined as the geometrical plane lying on the bars 3a, 3b. Preferably, the base plane is a horizontal plane. Further, the mounting frame 2 comprises a rod 6 connected to the first bar 3a and to the second bar 3b at the first ends 4 of the selfsame bars 3a, 3b in order to connect them securely to each other. The mounting frame 2 also comprises a crossbeam 7 connected to the first bar 3a and to the second bar 3b at the second ends 5 of the selfsame bars 3a, 3b in order to connect them securely to each other. Thus, the rod 6, the crossbeams 7 and the bars 3a, 3b together form a stiff and compact structure.

The device 1 according to the invention also comprises a plurality of conveyor units 8 mounted on the mounting frame 2 substantially along the conveying direction T and alongside each other.

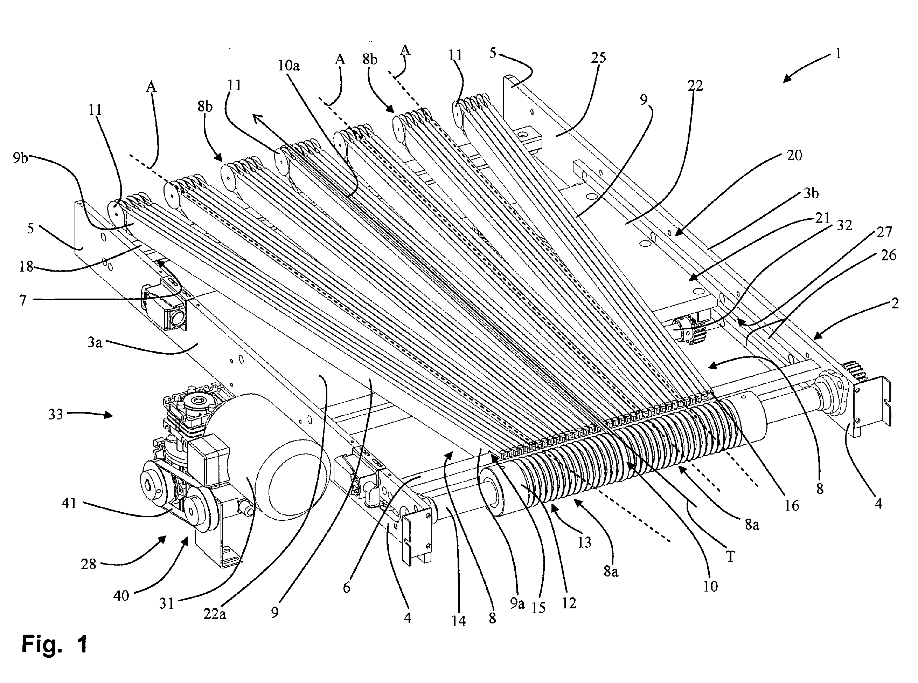

As may be seen in Figure 1, the conveying units 8 run alongside each other from the first bar 3a to the second bar 3b or vice versa.

Further, each conveyor unit 8 extends along a respective principal direction of extension A from a respective infeed portion 8a to a respective outfeed portion 8b. More specifically, the infeed portion 8a of each conveying unit 8 is located at the first ends 4 of the bars 3a, 3b, whilst the outfeed portion 8b of each conveying unit 8 is located at the second ends 5 of the bars 3a, 3b. Further, in the preferred embodiment illustrated in the accompanying drawings, the infeed portion 8a of each conveying unit 8 is located in the proximity of the rod 6, whilst the outfeed portion 8b of each conveying unit 8 is located in the proximity of the crossbeam 7.

Each conveying unit 8 also comprises a supporting bar 9 which extends longitudinally along the principal axis of extension A between a respective first end 9a located in the proximity of the infeed portion 8a and a respective second end 9b located in the proximity of the outfeed portion 8b.

More precisely, the first end 9a of each supporting bar 9 is located at the rod 6, and the second end 9b of each supporting bar 9 is located at the crossbeam 7.

Preferably, the outfeed portion 8b of each conveying unit 8 is mounted on the respective supporting bar 9 at the second end 9b of the supporting bar 9 itself.

In addition, each conveying unit 8 comprises an endless belt 10 trained at least around the infeed portion 8a and the outfeed portion 8b to convey at least part of the food dough from the infeed portion 8a to the outfeed portion 8b. The belt 10 is also trained around the respective supporting bar 9 in such a way as to be supported by it.

In detail, each belt 10 defines a forward feed section 10a for conveying part of the dough, and a return section 10b. Advantageously, during use, the forward feed section 10a of the belt 10 is in sliding contact with the respective supporting bar 9 in such a way as to be supported by it. In other words, the supporting bar 9 supports the forward feed section 10a of the belt 10 in such a way as to prevent the forward feed section 10a of the belt 10 from sagging while it transports the pieces of dough.

In addition, each belt 10 conveys a piece of dough from a respective infeed station, located at the infeed portion 8a of the respective conveying unit 8, to a respective outfeed station, located at the outfeed portion 8b of the respective conveying unit 8. The forward feed section 10a of the belt 10 thus extends from the infeed station to the outfeed station, whilst the return section 10b extends from the outfeed station to the infeed station.

Also, as shown in the accompanying drawings, the outfeed portion 8b of each conveying unit 8 comprises a pulley 11 which is rotatably mounted on the supporting bar 9. Each pulley 11 is rotatable about an axis of rotation which is substantially parallel to the base plane and substantially transversal to the principal axis of extension A of the respective conveying unit 8. In detail, each belt 10 is trained around a respective pulley 11.

The device 1 also comprises a drive roller 12 which is rotatably mounted on the mounting frame 2 and which has a plurality of grooves 13 for receiving the belts 10. Preferably, the drive roller 12 is mounted on a rotating shaft 14 which rotates relative to the mounting frame 2 and which extends from the first bar 3a to the second bar 3b. More specifically, the rotating shaft 14 extends at the first ends 4 of the bars 3a, 3b. Still more specifically, the rotating shaft 14 extends parallel to the rod 6 and is located between the selfsame rod 6 and the first ends 4 of the bars 3a, 3b.

Further, the receiving grooves 13 are located along the length of the rotating shaft 14 and transversely to the conveying direction T. Still more specifically, each receiving groove 13 extends in a circle round the drive roller 12 in such a way as to define a plane which the belt 10 lies in. The receiving groove 13 define planes which are parallel to each other.

Preferably, each infeed portion 8a is defined by a respective receiving groove 13.

Further, each belt 10 is inserted in a respective receiving groove 13.

In other words, each belt 10 is looped around a respective pulley 11 at the second ends 5 of the bars 3a, 3b and a respective groove 13 of the drive roller 12 at the first ends 5 of the bars 3a, 3b. During use, each belt 10 turns partly around the rotating shaft 14 at the infeed portion 8a of the respective conveying unit 8. Further, each belt 10 also rotates partly about the axis of rotation at the pulley 11 of the respective conveying unit 8. Further, the drive roller 12 is preferably motor driven in order to drive the belts 10. In detail, the drive roller 12 is connected to the rotating shaft 14 which is in turn operatively connected to a motor (not illustrated in the drawings) to rotate the drive roller 12 itself.

According to the invention, the outfeed portion 8b of each conveying unit 8 is movable relative to the mounting frame 2 along a movement path M which is substantially transversal to the principal axis of extension A of the conveying unit 8 and substantially parallel to the base plane in such a way that the principal axes of extension A can be set at an angle to each other.

In other words, by moving each outfeed portion 8b along the respective movement path M it is possible to take the conveying units 8 from a starting position, where the principal axes of extension A are parallel to each other, to an end position, where at least part of the principal axes of extension A of the conveying units 8 are at a predefined angle to each other.

In other words, again, the outfeed portions 8b are movable towards or away from each other.

Looking in more detail at the preferred embodiment, the outfeed portions 8b are movable towards or away from one of the bars 3a, 3b of the mounting frame 2.

Further, the outfeed portion 8b of each conveying unit 8 is rotatably mounted on the mounting frame 2 and the movement path M is a circular arc.

In other words, the movement of the outfeed portion 8b of each conveying unit 8 describes a circular arc. The circular arc extends preferably from the first bar 3a to the second bar 3b of the mounting frame 2.

In the preferred embodiment illustrated in the accompanying drawings, the supporting bar 9 is rotatably connected to the mounting frame 2 at the first end of it 9a.

More specifically, the supporting bar 9 is rotatably connected to the rod 6 at its first end 9a.

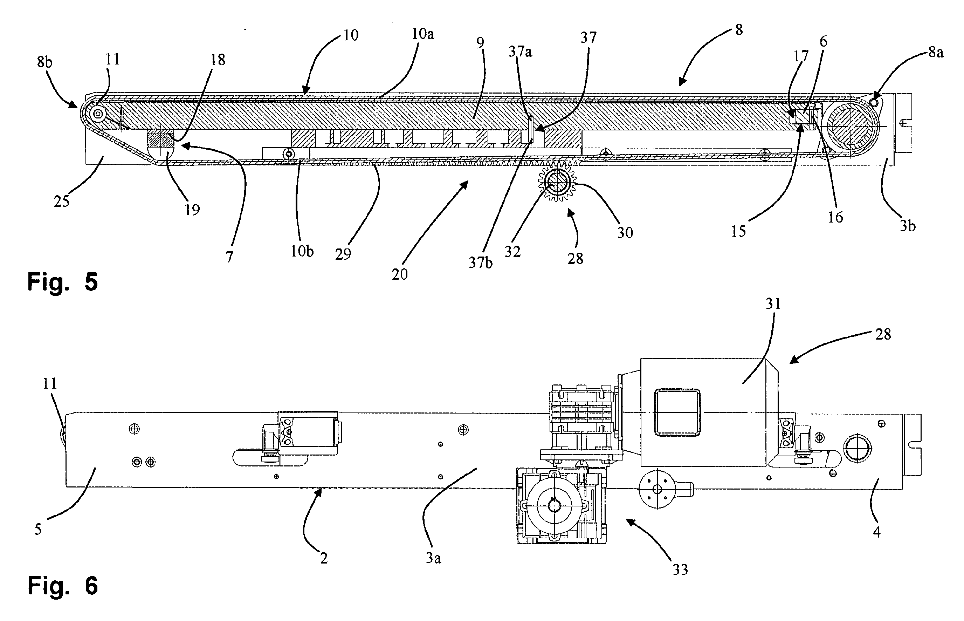

As shown in Figure 5, the first end 9a of each supporting bar 9 has a respective open cavity 15 in which a part of the rod 6 is inserted. The mounting frame 2 also comprises, for each supporting bar 9, a rotating pin 16 inserted in the supporting bar 9 and passing through a part of the rod 6. The rotating pin 16 also passes through the centre of the circular arc.

Advantageously, the device 1 has an empty space 17 (Figure 5) between the part of the rod 6 inserted in the cavity 15 and the supporting bar 9 to allow the supporting bar 9 to move relative to the rod 6. Further, as shown in Figure 1, each supporting bar 9 is mounted to rest on the mounting frame 2 at its second end 9b.

Preferably, each supporting bar 9 is mounted to rest on the crossbeam 7.

Advantageously, during the movement of each outfeed portion 8b along the movement path M, the supporting bar 9 slides on the crossbeam 7.

During the movement of each outfeed portion 8b along the movement path M, the belts 10 pass from a configuration in which they are parallel to each other to a configuration in which they are at least partly divergent. More specifically, the outfeed stations of the belts 10 move along the movement path M towards and away from each other.

Further, the conveying units 8 can be configured in a plurality of preset, distinct configurations according to the number of conveying units 8 having principal axes of extension A which are parallel to each other. In particular, conveying units 8 having principal axes of extension A which are parallel to each other constitute a group.

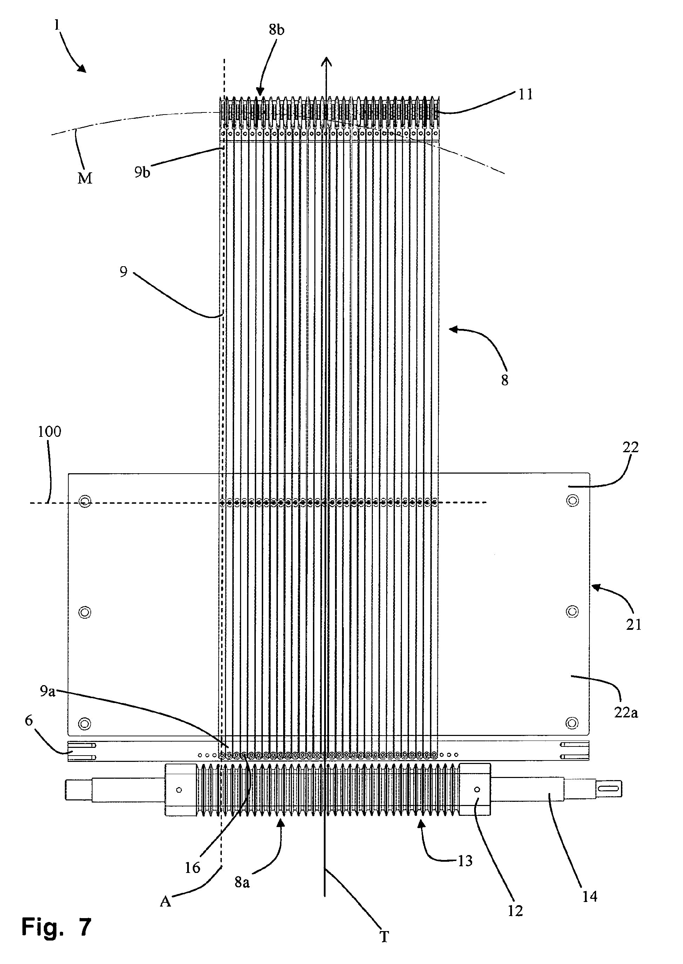

For example, Figure 7 shows a first configuration in which all the conveying units 8 have axes of extension which are parallel to each other and constitute a single group. In other words, in the first configuration, the second ends 8b of the conveying units 8 are side by side. In other words, again, the belts 10 are parallel to each other.

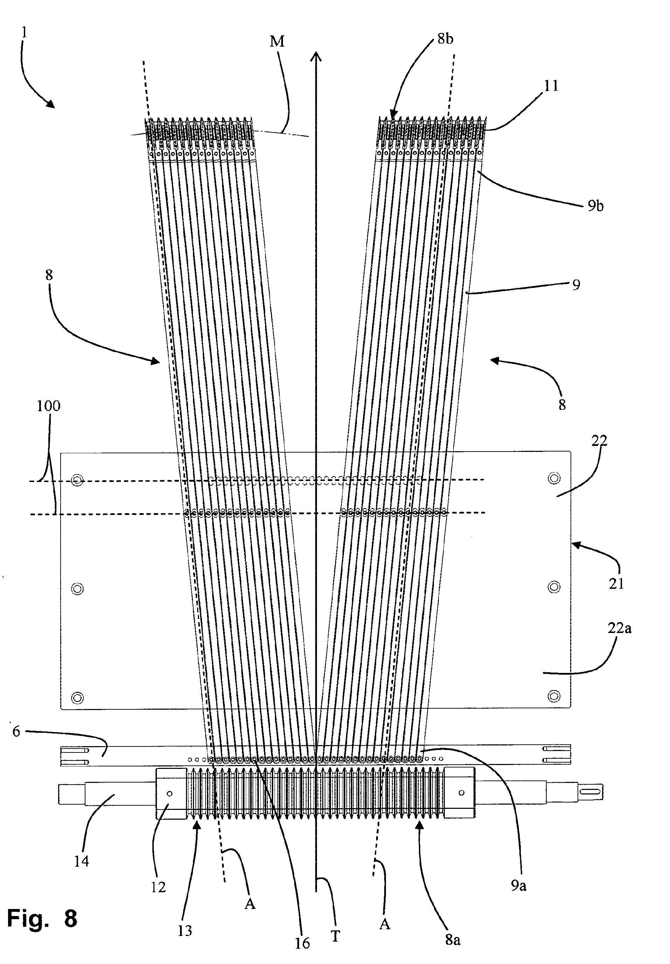

In a second operating configuration, illustrated in Figure 8, the conveying units 8 are divided into two groups. Each group comprises conveying units 8 whose principal axes of extension A are parallel to each other. Further, the principal axes of extension A of a conveying unit 8 of one group are at an angle to the axes of extension A of a conveying unit 8 of the other group. In other words, the belts 10 diverge from each other.

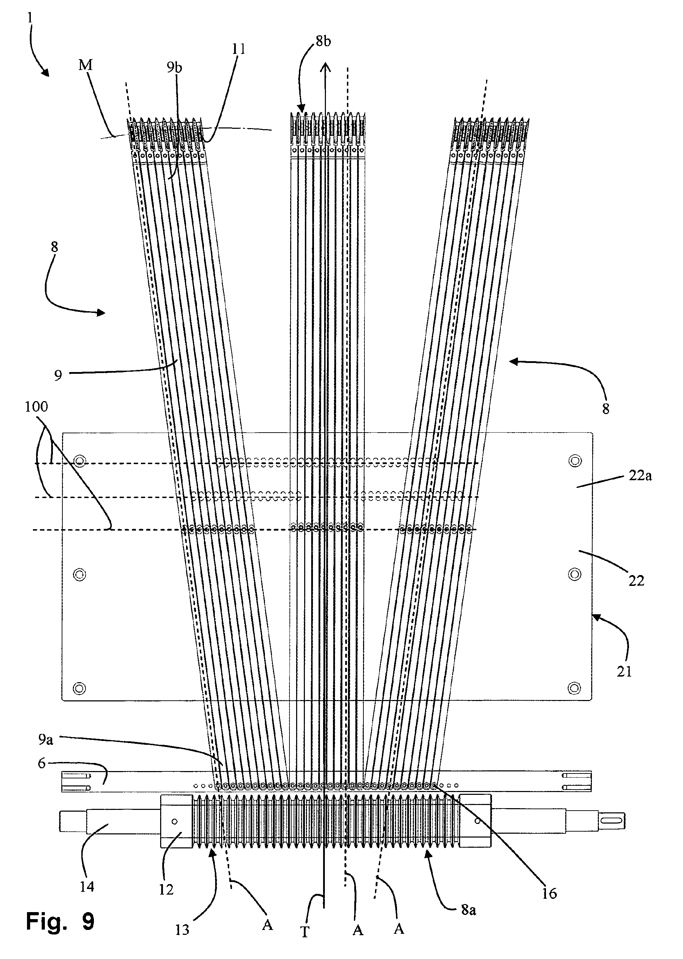

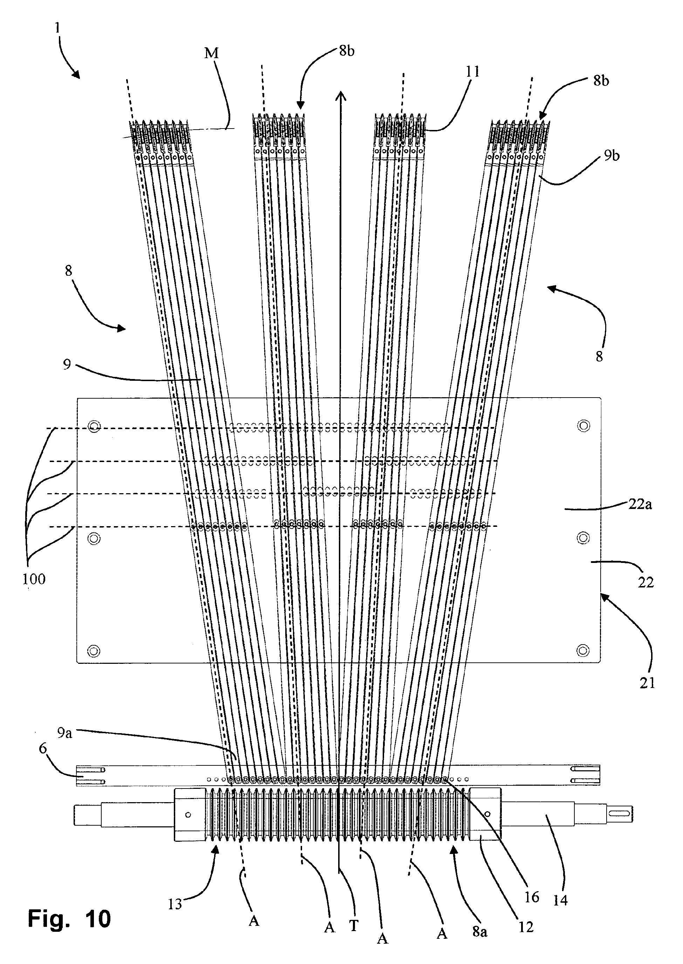

In a third operating configuration, illustrated in Figure 9, the conveying units 8 are divided into three groups. Each group comprises conveying units 8 whose principal axes of extension A are parallel to each other. The principal axes of extension A of a conveying unit 8 of one group are at an angle to the axes of extension A of a conveying unit 8 of another group. In this configuration, too, the belts 10 diverge from each other.

Preferably, the axes of extension A of conveying units 8 belonging to different groups in each configuration are at set at the same angle to each other.

In addition to what has been described up to now, each pulley 11 is movable along the respective movement path M in such a way as to move the outfeed station of the belt 10 along the selfsame movement path M.

In other words, during the movement of each pulley 11 along the movement path M, the respective groove 13 of the drive roller 12 remains fixed and the principal axis of extension A of the respective conveying unit 8 diverges from the conveying direction T.

Further, the forward feed section 10a of the belt 10 is in contact with the respective supporting bar 9, as mentioned above, while the return section 10b is spaced from the supporting bar 9.

More specifically, the crossbeam 7 comprises a supporting portion 18 which is in sliding contact with the supporting bars 9 (as described above) and a with respective shaped portion 19 opposite the supporting portion 18 and spaced from the supporting bars 9.

As shown in Figure 5, the shaped portion 19 keeps part of the return section 10b of each belt 10 spaced from the crossbeam 7 so as to keep it tensioned.

In other words, at least part of the return section 10b of each belt 10 is trained around the crossbeam 7 and is in contact with the shaped portion 19.

The device 1 of this invention also comprises guide means 20 operating on the conveying units 8 to guide them along the movement path M of the outfeed portions 8b.

In particular, the guide means 20 operate on each supporting bar 9 of the conveying units 8.

Further, the guide means 20 operate on the conveying units 8 in order to selectively position the conveying units 8 in the predefined configurations.

The guide means 20 comprise a body 21 slidably mounted on the mounting frame 2 and slidable along the conveying direction T of the mounting frame 2. Preferably, the body 21 is slidable in parallel with the base plane of the mounting frame 2.

Further, the body 21 is slidable between a starting position (shown in Figure 7), where it is close to the infeed portion 8a of each conveying unit 8, and an end position where it is close to the outfeed portion 8b of each conveying unit 8.

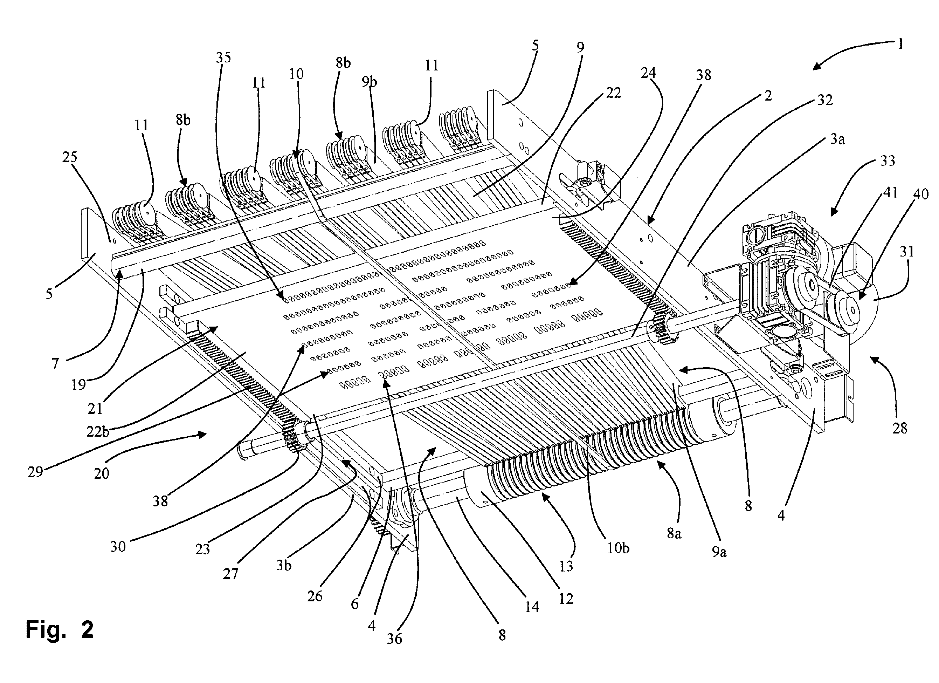

In the preferred embodiment shown, for example, in Figure 2, the body 21 comprises a plate 22 having a guide surface 22a facing the conveying units 8 and a movement face 22b opposite it. More specifically, the plate 22 is positioned between the supporting means and the return section 10b of each belt 10. Further, the plate 22 extends perpendicularly to the conveying direction T from a first lateral profile of it 23 to a second lateral profile of it 24. In detail, the first lateral profile 23 of the plate 22 is in sliding contact with the first bar 3a of the mounting frame 2, whilst the second lateral profile 24 of the plate 22 is in sliding contact with the second bar 3b of the mounting frame 2.

As may be observed in Figure 2, each bar has an inside face 25 which is directed towards the other bar where it is in sliding contact with the plate 22, as mentioned above. In particular, the device 1 comprises two supports 26 mounted on the inside face 25 of each bar. Each support 26 has a principally longitudinal extension along the conveying direction T. Further, the supports 26 mounted on the inside face 25 of each bar 3a, 3b are parallel to each other and spaced in such a way as to define a slideway 27 in which the respective profile of the plate 22 is inserted.

That way, the plate 22 is supported at each of its lateral profiles 23, 24 by the supports 26 and can slide from the starting position to the end position.

The device 1 further comprises movement means 28 operatively associated with the body 21 to make it slide between the starting position and the end position.

In particular, the movement means 28 comprise at least one rack gear 29 connected to the body 21, at least one toothed pinion 30 meshed with the rack gear 29 and a motor 31 operatively connected to the toothed pinion 30.

In the preferred embodiment illustrated in the accompanying drawings, the movement means 28 comprise two rack gears 29 connected to the movement face 22b of the plate 22. More specifically, each rack gear 29 is connected to the plate 22 in the proximity of the lateral profiles 23, 24 of the selfsame plate 22. Each rack gear 29 extends longitudinally along the conveying direction T. Each rack gear 29 also comprises a plurality of teeth protruding from the movement face 22b of the plate 22.

As may be seen in Figure 2, the movement means 28 comprise a drive shaft 32 on which two pinions 30 are mounted, each at a respective rack gear 29. In particular, the drive shaft 32 extends perpendicularly to the conveying direction T. As also shown in Figure 2, each pinion 30 is meshed with the respective rack gear 29 in such a way that rotation of the drive shaft 32 causes the body 21 to slide on the mounting frame 2.

As shown, again in Figure 2, the movement means 28 comprise a motor 31 operatively connected to a reduction gear unit 33 to transmit motion to the drive shaft 32. More specifically, the motor 31 is mounted on the mounting frame 2 at the second bar 3b. Preferably, the motor 31 transmits motion, through the reduction gear unit 33, to a portion of the drive shaft 32 which protrudes in cantilever fashion from the second bar 3b of the mounting frame 2.

Advantageously, the movement of the motor 31 causes the drive shaft 32 to rotate and this in turn causes the plate 22 to slide from the starting position to the end position or vice versa. According to the invention, the body 21 comprises a plurality of channels 34, each of which runs along a respective feed path. In particular, each feed path extends from a respective starting point 35 to a respective end point 36. In still more detail, the feed paths do not intersect each other.

Each conveying unit 8 comprises a pin 37 engaged in a respective channel 34 in such a way as to follow the feed path during the sliding movement of the body 21.

That way, as the body 21 slides, each pin 37 runs in the respective channel 34, causing the respective conveying unit 8 to run on the mounting frame 2. In other words, as the body 21 slides, each pin 37 runs in the respective channel 34, thus moving the outfeed portion 8b of the respective conveying unit 8.

In other words, again, as the body 21 slides, at least part of the outfeed portions 8b of the conveying units 8 move towards or away from each other.

In addition, as the body 21 slides, each pin 37 runs from its respective starting point 35 to its respective end point 36 or vice versa. More specifically, when each pin 37 is engaged in the channel 34 at the starting point 35, the body 21 is located at the starting position (shown in Figure 7), whereas when each pin 37 is engaged in the channel 34 at the end point 36, the body 21 is located at the end position.

Preferably, the starting points 34 of the feed paths are located at each outfeed portion 8b of the respective conveying unit 8, whilst the end points 35 of the feed paths are located at each infeed portion 8a of the respective conveying unit 8.

In other words, each feed path runs from the starting point 35 to the end point 36 in the opposite direction to the conveying direction T.

In the preferred embodiment illustrated, for example, in Figure 5, each pin 37 is connected to a respective supporting bar 9. More specifically, each pin 37 comprises a respective first portion 37a partly incorporated in the supporting bar 9 and a respective second portion 37b protruding from the supporting bar 9 and at least partly engaged in a respective channel 34 (Figure 5).

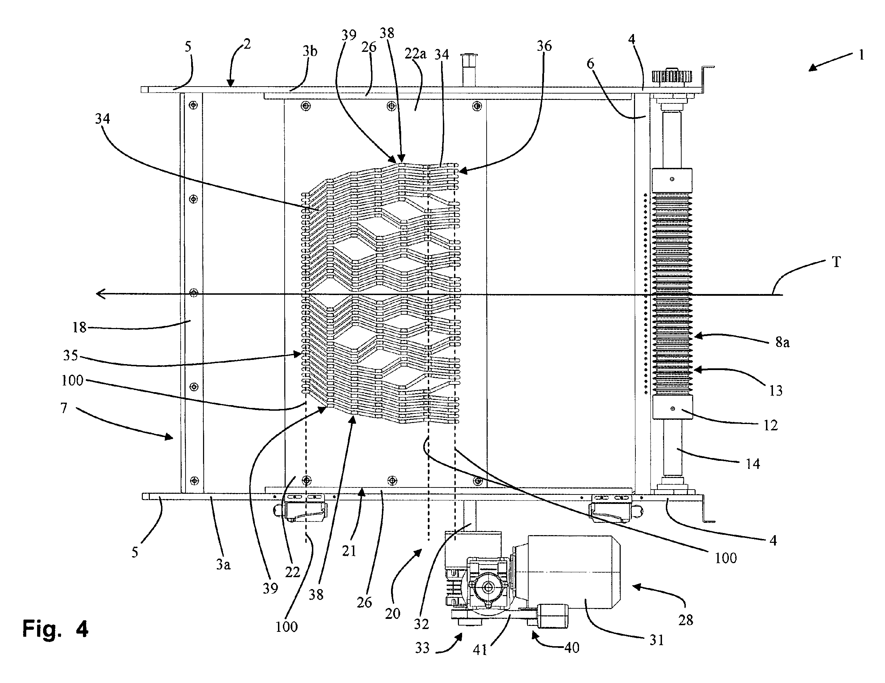

In the preferred embodiment, as illustrated for example in Figure 4, the guide surface 22a of the plate 22 comprises the channels 34.

In particular, from its starting point 35 to its end point 36, each channel 34 has a plurality of dwell points 38. Each dwell point 38 defines a predefined angular position of a respective conveying unit 8.

In other words, each dwell point 38 defines a predefined angular position of the principal direction of extension A of the respective conveying unit 8 relative to the conveying direction T.

Further, the dwell points 38 of each feed path are substantially aligned along a plurality of parallel dwell lines 100 which are substantially perpendicular to the conveying direction T. Each dwell line 100 defines a configuration of the conveying units 8.

For example, in Figure 7, the conveying units 8 are in a first configuration and the respective pins are engaged in respective dwell points 38 substantially positioned on a first dwell line 100. In Figure 8, the conveying units 8 are in a second configuration and the body 21 is further away from the first portions than in the first configuration. In the second configuration, the pins of the conveying units 8 are engaged in respective dwell points 38 substantially positioned on a second dwell line 100.

In Figure 9, the conveying units 8 are in a third configuration and the body 21 is further away from the first portions than in the second configuration. In the third configuration, the pins of the conveying units 8 are engaged in respective dwell points 38 substantially positioned on a third dwell line 100.

In addition, the dwell points 38 are grouped together in a predefined number of groups associated with the predefined configuration. The number of groups of dwell points 38 in a predefined configuration corresponds to the number of groups of conveying units 8 in that configuration.

In particular, dwell points 38 belonging to the same group are side by side along the respective dwell line 100, whilst dwell points 38 belonging to different groups are spaced from each other.

For example, in Figure 7, the dwell points 38 relating to the first configuration are grouped in two different groups. In Figure 8, the dwell points 38 relating to the second configuration are grouped in three different groups. In Figure 9, the dwell points 38 relating to the third configuration are grouped in four different groups.

Further, each dwell point 38 is defined by an elongate portion 39 of the respective channel 34. Each elongate portion 39 extends principally along a direction of extension parallel to the conveying direction T.

Advantageously, the elongate portion 39 allows each conveying unit 8 to remain in a configuration even in the event of minor positioning errors of the body 21. The expression "minor positioning errors of the body 21" is used to mean displacements of the plate 22 preferably up to 5 millimetres along the conveying direction T.

That way, when in a given configuration, each conveying unit 8 remains with its principal axis of extension A set at substantially the same angle to the conveying direction T.

In the preferred embodiment illustrated, for example, in Figure 4, each channel 34 is defined by a cut on the body 21. Preferably, each pin 37 is at least partly inserted in the cut.

Advantageously, at the dwell points 38 the cut is a through cut (Figure 4) so as to allow residues (flour, dirt, dough scraps) present on the pieces of dough being transported to drop to the floor without settling on the body 21.

In other words, the through cut at the dwell points 38 defines elongate slots which allow waste to drop to the floor.

In an alternative embodiment not illustrated in the accompanying drawings, each cut is defined by a through slot extending along the feed path. In particular, the pin 37 is at least partly inserted in a respective slot.

The device 1 also comprises a control unit operatively associated with the movement means 28 to drive the sliding movement of the body 21 on the mounting frame 2.

In particular, the control unit drives the sliding movement of the body 21 according to the configuration to be set for the conveying units 8. In the preferred embodiment illustrated, for example, in Figure 2, the movement means 28 are operatively connected to a detection roller 40. The control unit also comprises a detection device which is operatively associated with the detection roller 40 to detect the position of the detection roller 40.

Thus, the control unit drives the sliding movement of the body 21 according to the position of the detection roller 40 detected by the detection device.

In other words, the control unit is set up to calculate the position of the body 21 according to the position of the detection roller 40. Preferably, the detection roller 40 is connected by a belt 41 to the drive shaft 32.

The detection device preferably also comprises an encoder.

The operation of the conveying device 1 of the invention may be inferred directly from the description made of it up to now.

In particular, the body 21 can be moved through the agency of the control unit in such a way as to make the pin 37 run along the respective feed path in order to obtain the desired configuration. In particular, each configuration involves the pins being engaged in the respective channels 34 at a dwell line 100.

The movement of the body 21 determines both the number of conveying units 8 for each group and the angle of the principal axis of extension A of each conveying unit 8 relative to the conveying direction T.

Advantageously, by changing the body 21 it is possible to modify the configurations of the conveying units 8.

In conclusion, the device 1 is preferably used to convey pieces of dough from the infeed portion 8a to the outfeed portion 8b of the conveying units 8 and to space them out while they are being conveyed.

Preferably, the pieces of dough are strips of dough which are transported and spaced out from each other by the conveying units 8 of the device 1.

In other words, the device 1 is an automatic spacing device for strips of dough.

This invention achieves the above mentioned aims.

Firstly, this food dough conveying device facilitates the passage from a condition in which the belts are parallel to each other to a condition in which they diverge.

In effect, each belt is mounted on a supporting bar which is rotatably connected to the mounting frame in such a way that it can displace the outfeed portion of each conveying unit.

Secondly, this food dough conveying device guarantees precise positioning of the belts during the passage from a condition in which the belts are parallel to each other to a condition in which they diverge. In effect, the passage from one condition to the other is controlled by the sliding of the pins along the respective ready-made feed paths.

It should also be noted that this invention is relatively easy to carry out and even the cost connected with the implementation of the invention is not very high.

## Claims

1. A food dough conveying device (1) comprising:
a mounting frame (2) defining a base plane and extending at least along a conveying direction (T);
a plurality of conveyor units (8) mounted on the mounting frame (2) substantially along the conveying direction (T) and alongside each other; each conveyor unit (8) extending along a respective principal direction of extension (A) from a respective infeed portion (8a) to a respective outfeed portion (8b); each conveying unit (8) further comprising a respective endless belt (10) trained at least around the infeed portion (8a) and the outfeed portion (8b) to convey at least part of the food dough from the infeed portion (8a) to the outfeed portion (8b); the outfeed portion (8b) of each conveying unit (8) being movable relative to the mounting frame (2) along a movement path (M) which is substantially transversal to the principal axis of extension (A) of the conveying unit (8) and substantially parallel to the base plane in such a way that the principal axes of extension (A) can be set at an angle to each other; guide means (20) operating on the conveying units (8) to guide them along the movement path (M) of the outfeed portions (8b),
**characterized in that** the guide means (20) comprise a body (21) slidably mounted on the mounting frame (2) and slidable along the conveying direction (T) of the mounting frame (2); the body (21) comprising a plurality of channels (34) each running along a respective feed path; each conveying unit (8) comprising a pin (37) engaged in a respective channel (34) in such a way as to follow the feed path during the sliding movement of the body (21).

2. The device (1) according to claim 1, **characterized in that** each conveying unit (8) comprises a supporting bar (9) which extends longitudinally along the principal axis of extension (A) between a respective first end (9a) located in the proximity of the infeed portion (8a) and a respective second end (9b) located in the proximity of the outfeed portion (8b); the supporting bar (9) being rotatably connected to the mounting frame (2) at its first end (9a), so that the movement path (M) is a circular arc.

3. The device (1) according to claim 2, **characterized in that** each supporting bar (9) is mounted to rest on the mounting frame (2) at its second end.

4. The device (1) according to claim 2 or 3, **characterized in that** the belt (10) defines a forward feed section (10a) for conveying part of the dough, and a return section (10b); the belt (10) being trained around the respective supporting bar (9); the forward feed section (10a) of the belt (10) being in contact with the respective supporting bar (9), the return section (10b) being spaced from the respective supporting bar (9).

5. The device (1) according to claim 4, **characterized in that** the mounting frame (2) comprises a crossbeam (7) extending parallel to the base plane and transversally to the conveying direction (T) of the mounting frame (2); the crossbeam (7) comprising a respective shaped portion (19) spaced from the supporting bars (9); at least part of the return section (10b) of each belt (10) being trained around the crossbeam (7) and being in contact with the shaped portion (19); the shaped portion (19) keeping the return section (10b) of each belt (10) spaced from the respective supporting bar (9).

6. The device (1) according to any of the claims from 2 to 5, **characterized in that** the outfeed portion (8b) of each conveying unit (8) comprises a pulley (11) rotatably mounted on the supporting bar (9); the device (1) further comprising a drive roller (12) rotatably mounted on the mounting frame (2) and having plurality of grooves (13) for receiving the belts (10); each infeed portion (8a) being defined by a respective receiving groove (13).

7. The device (1) according to claim 1, **characterized in that** the conveying units (8) can be configured in a plurality of preset, distinct configurations according to the number of conveying units (8) having principal axes of extension (A) which are parallel with each other; the guide means (20) operating on the conveying units (8) to selectively position the conveying units (8) in the preset configurations.

8. The device (1) according to claim 1, **characterized in that** each channel (34) has a plurality of dwell points (38); each dwell point (38) defining an angular position of a respective conveying unit (8).

9. The device (1) according to claim 8, **characterized in that** the dwell points (38) are substantially aligned along a plurality of parallel dwell lines (100) substantially perpendicular to the conveying direction (T); each dwell line (100) defining a configuration of the conveying units (8).

10. The device (1) according to claim 8 or 9, **characterized in that** each dwell point (38) is defined by an elongate portion (39) of the respective channel (34); each elongate portion (39) extending principally along a direction of extension parallel to the conveying direction (T).

11. The device (1) according to any of preceding claims, **characterized in that** each channel (34) is defined by a cut on the body (21).

12. The device (1) according to claim 11, **characterized in that** each cut is defined by a through slot; the pin (37) being at least partly inserted in a respective slot.

13. The device (1) according to any of the preceding claims, **characterized in that** the body (21) comprises a plate (22) having a guide surface (22a) facing the conveying units (8) and comprising the channels (34).

14. The device (1) according to any of the preceding claims, **characterized in that** it comprises movement means (28) operatively associated with the body (21) to make it slide between a start condition and an end condition.

15. The device (1) according to claim 14, **characterized in that** the movement means (28) comprise a rack gear (29) connected to the body (21), a toothed pinion (30) meshed with the rack gear (29) and a motor (31) operatively connected to the toothed pinion (30).

16. The device (1) according to claim 13, **characterized in that** it comprises a control unit operatively associated with the movement means (28) to drive the sliding movement of the body (21) on the mounting frame (2).

17. The device (1) according to claim 16, **characterized in that** the movement means (28) are operatively connected to an idle detection roller (40); the control unit comprising a detection device operatively associated with the detection roller (40) for detecting the position of the detection roller (40); the control unit driving the sliding movement of the body (21) according to the position of the detection roller (40) detected by the detection device.

## Patentansprüche

1. Nahrungsmittelteigtransportvorrichtung (1), umfassend:
einen Montagerahmen (2), definierend eine Basisebene und sich erstreckend mindestens entlang einer Transportrichtung (T);
eine Vielzahl an Transporteinheiten (8), montiert auf dem Montagerahmen (2) im Wesentlichen entlang der Transportrichtung (T) und nebeneinander; wobei sich jede Transporteinheit (8) entlang einer jeweiligen Haupterstreckungsrichtung (A) von einem jeweiligen Zuführungsabschnitt (8a) bis zu einem jeweiligen Auslaufabschnitt (8b) erstreckt; wobei jede Transporteinheit (8) zudem ein jeweiliges Endlosförderband (10) umfasst, das mindestens um den Zuführungsabschnitt (8a) und den Auslaufabschnitt (8b) gezogen wird, um mindestens einen Teil des Nahrungsmittelteigs vom Zuführungsabschnitt (8a) zum Auslaufabschnitt (8b) zu transportieren; wobei der Auslaufabschnitt (8b) jeder Transporteinheit (8) zum Montagerahmen (2) entlang eines Bewegungswegs (M), der im Wesentlichen transversal zur Haupterstreckungsachse (A) der Transporteinheit (8) und im Wesentlichen parallel zur Basisebene verläuft, bewegbar ist, sodass die Haupterstreckungsachsen (A) auf einen Winkel zueinander eingestellt werden können;
Führungsmittel (20), arbeitend auf den Transporteinheiten (8), um diese entlang des Bewegungswegs (M) der Auslaufabschnitte (8b) zu führen, **dadurch gekennzeichnet, dass** die Führungsmittel (20) einen Körper (21) umfassen, der verschiebbar auf dem Montagerahmen (2) montiert ist und entlang der Transportrichtung (T) des Montagerahmens (2) verschoben werden kann; wobei der Körper (21) eine Vielzahl an Kanälen (34) umfasst, die entlang eines jeweiligen Zuführungswegs verlaufen; wobei jede Transporteinheit (8) einen Zapfen (37) umfasst, der in einen jeweiligen Kanal (34) eingreift, sodass der Zuführungsweg während der Verschiebebewegung des Körpers (21) verfolgt wird.

2. Vorrichtung (1) nach Anspruch 1, **dadurch gekennzeichnet, dass** jede Transporteinheit (8) einen Haltestab (9) umfasst, der sich längs entlang der Haupterstreckungsachse (A) zwischen einem jeweiligen ersten Ende (9a) in der Nähe des Zuführungsabschnitts (8a) und einem jeweiligen zweiten Ende (9b) in der Nähe des Auslaufabschnitts (8b) erstreckt; wobei der Haltestab (9) drehbar mit dem Montagerahmen (2) an dessen ersten Ende (9a) verbunden ist, sodass es sich beim Bewegungspfad (M) um einen Kreisbogen handelt.

3. Vorrichtung (1) nach Anspruch 2, **dadurch gekennzeichnet, dass** jeder Haltestab (9) zur Auflage auf dem Montagerahmen (2) an dessen zweiten Ende montiert ist.

4. Vorrichtung (1) nach Anspruch 2 oder 3, **dadurch gekennzeichnet, dass** das Band (10) einen Vorwärtszuführungsabschnitt (10a), um einen Teil des Teigs zu transportieren, und einen Rücklaufabschnitt (10b) definiert; wobei das Band (10) rund um den jeweiligen Haltestab (9) gezogen wird; wobei der Vorwärtszuführungsabschnitt (10a) des Bands (10) mit dem jeweiligen Haltestab (9) in Kontakt ist und der Rücklaufabschnitt vom jeweiligen Haltestab (9) beabstandet ist.

5. Vorrichtung (1) nach Anspruch 4, **dadurch gekennzeichnet, dass** der Montagerahmen (2) einen Querträger (7) umfasst, der sich parallel zur Basisebene und transversal zur Transportrichtung (T) des Montagerahmens (2) erstreckt; wobei der Querträger (7) einen jeweiligen geformten Abschnitt (19) umfasst, der von den Haltestäben (9) beabstandet ist; wobei mindestens ein Teil des Rücklaufabschnitts (10b) jedes Bands (10) rund um den Querträger (7) gezogen wird und in Kontakt mit dem geformten Abschnitt (19) ist; wobei der geformte Abschnitt (19) den Rücklaufabschnitt (10b) jedes Bands (10) vom jeweiligen Haltestab (9) beabstandet hält.

6. Vorrichtung (1) nach einem der Ansprüche 2 bis 5, **dadurch gekennzeichnet, dass** der Auslaufabschnitt (8b) jeder Transporteinheit (8) eine Antriebsscheibe (11) umfasst, die drehbar auf dem Haltestab (9) montiert ist; wobei die Vorrichtung (1) zudem eine Antriebsrolle (12) umfasst, die drehbar auf dem Montagerahmen (2) montiert ist und eine Vielzahl an Nuten (13) aufweist, um die Bänder (10) aufzunehmen; wobei jeder Zuführungsabschnitt (8a) durch eine jeweilige Aufnahmenut (13) definiert ist.

7. Vorrichtung (1) nach Anspruch 1, **dadurch gekennzeichnet, dass** die Transporteinheiten (8) in einer Vielzahl von vorgegebenen unterschiedlichen Konfigurationen konfiguriert werden können, je nach Zahl der Transporteinheiten (8), aufweisend Haupterstreckungsachsen (A), die parallel zueinander verlaufen; wobei die Führungsmittel (20) auf den Transporteinheiten (8) arbeiten, um die Transporteinheiten (8) selektiv in den vorgegebenen Konfigurationen zu positionieren.

8. Vorrichtung (1) nach Anspruch 1, **dadurch gekennzeichnet, dass** jeder Kanal (34) eine Vielzahl an Verweilpunkten (38) aufweist; wobei jeder Verweilpunkt (38) eine Winkelposition einer jeweiligen Transporteinheit (8) definiert.

9. Vorrichtung (1) nach Anspruch 8, **dadurch gekennzeichnet, dass** die Verweilpunkte (38) im Wesentlichen entlang einer Vielzahl von parallelen Verweillinien (100) ausgerichtet sind, die im Wesentlichen senkrecht zur Transportrichtung (T) verlaufen; wobei jede Verweillinie (100) eine Konfiguration der Transporteinheiten (8) definiert.

10. Vorrichtung (1) nach Anspruch 8 oder 9, **dadurch gekennzeichnet, dass** jeder Verweilpunkt (38) durch einen verlängerten Abschnitt (39) des jeweiligen Kanals (34) definiert ist; wobei jeder verlängerte Abschnitt (39) sich hauptsächlich entlang einer Erstreckungsrichtung erstreckt, die parallel zur Transportrichtung (T) verläuft.

11. Vorrichtung (1) nach einem der vorhergehenden Ansprüche, **dadurch gekennzeichnet, dass** jeder Kanal (34) durch einen Einschnitt auf dem Körper (21) definiert ist.

12. Vorrichtung (1) nach Anspruch 11, **dadurch gekennzeichnet, dass** jeder Einschnitt durch einen Durchgangsschlitz definiert ist; wobei der Zapfen (37) zumindest teilweise in einen jeweiligen Schlitz eingesetzt ist.

13. Vorrichtung (1) nach einem der vorhergehenden Ansprüche, **dadurch gekennzeichnet, dass** der Körper (21) eine Platte (22) umfasst, aufweisend eine Führungsoberfläche (22a), die den Transporteinheiten (8) gegenüberliegend angeordnet ist und die Kanäle (34) umfasst.

14. Vorrichtung (1) nach einem der vorhergehenden Abschnitte, **dadurch gekennzeichnet, dass** sie Bewegungsmittel (28) umfasst, die betriebswirksam mit dem Körper (21) verbunden sind, um dessen Verschieben zwischen einem Startzustand und einem Endzustand zu bewirken.

15. Vorrichtung (1) nach Anspruch 14, **dadurch gekennzeichnet, dass** die Bewegungsmittel (28) eine Zahnstange (29) umfassen, die mit dem Körper (21) verbunden ist, ein Zahnritzel (30), das mit der Zahnstange (29) in Eingriff gelangt, und einen Motor (31), der betriebswirksam mit dem Zahnritzel (30) verbunden ist.

16. Vorrichtung (1) nach Anspruch 13, **dadurch gekennzeichnet, dass** sie eine Steuereinheit umfasst, die betriebswirksam mit den Bewegungsmitteln (28) verbunden ist, um die Verschiebebewegung des Körpers (21) auf dem Montagerahmen (2) zu steuern.

17. Vorrichtung (1) nach Anspruch 16, **dadurch gekennzeichnet, dass** die Bewegungsmittel (28) betriebswirksam mit einer freilaufenden Erfassungsrolle (40) verbunden sind; wobei die Steuereinheit eine Erfassungsvorrichtung umfasst, die betriebswirksam mit der Erfassungsrolle (40) verbunden ist, um die Position der Erfassungsrolle (40) zu erfassen; wobei die Steuereinheit die Verschiebebewegung des Körpers (21) je nach der Position der Erfassungsrolle (40), die von der Erfassungsvorrichtung erfasst wurde, steuert.

## Revendications

1. Dispositif pour transporter de la pâte alimentaire (1) comprenant :
un cadre de montage (2) définissant un plan de base et se développant au moins le long d'une direction de transport (T) ;
une pluralité de transporteurs (8) montés sur le cadre de montage (2) substantiellement le long de la direction de transport (T) et placés les uns à côté des autres ; chaque transporteur (8) se développant le long d'une direction principale respective de développement (A) à partir d'une partie d'entrée correspondante (8a) vers une partie de sortie correspondante (8b) ; chaque transporteur (8) comprenant de plus une courroie sans fin respective (10) tractée au moins autour de la partie d'entrée (8a) et de la partie de sortie (8b) pour transporter au moins une partie de la pâte alimentaire de la partie d'entrée (8a) vers la partie de sortie (8b) ; la partie de sortie (8b) de chaque transporteur (8) étant mobile par rapport au cadre de montage (2) le long d'une trajectoire de déplacement (M) étant substantiellement transversale par rapport à l'axe principal de développement (A) du transporteur (8) et substantiellement parallèle par rapport au plan de base de sorte que les axes principaux de développement (A) peuvent être placés suivant un angle les uns par rapport aux autres ;
des moyens de guidage (20) agissant sur les transporteurs (8) pour les guider le long de la trajectoire de déplacement (M) des parties de sortie (8b),
**caractérisé en ce que** les moyens de guidage (20) comprennent un corps (21) monté de façon coulissante sur le cadre de montage (2) et coulissant le long de la direction de transport (T) du cadre de montage (2) ; le corps (21) comprenant une pluralité de canaux (34) chacun évoluant le long d'une trajectoire d'entrée respective ; chaque transporteur (8) comprenant un goujon (37) engagé dans un canal respectif (34) de sorte à suivre la trajectoire d'entrée lors du déplacement coulissant du corps (21).

2. Dispositif (1) selon la revendication 1, **caractérisé en ce que** chaque transporteur (8) comprend une barre de soutien (9) qui se développe longitudinalement le long de l'axe principal de développement (A) entre une première extrémité correspondante (9a) située à proximité de la partie d'entrée (8a) et une seconde extrémité correspondante (9b) située à proximité de la partie de sortie (8b) ; la barre de soutien (9) étant reliée de façon rotative au cadre de montage (2) à sa première extrémité (9a), de sorte que la trajectoire de déplacement (M) forme un arc circulaire.

3. Dispositif (1) selon la revendication 2, **caractérisé en ce que** chaque barre de soutien (9) est montée de sorte à reposer sur le cadre de montage (2) au niveau de sa seconde extrémité.

4. Dispositif (1) selon les revendications 2 ou 3, **caractérisé en ce que** la courroie (10) définit une section d'avancée (10a) pour transporter une partie de la pâte, et une section de retour (10b) ; la courroie (10) étant tractée autour de la barre de soutien correspondante (9) ; la section d'avancée (10a) de la courroie (10) étant en contact avec la barre de soutien correspondante (9), la section de retour (10b) étant espacée de la barre de soutien correspondante (9).

5. Dispositif (1) selon la revendication 4, **caractérisé en ce que** le cadre de montage (2) comprend une traverse (7) se développant parallèlement par rapport au plan de base et transversalement par rapport à la direction de transport (T) du cadre de montage (2) ; la traverse (7) comprenant une partie profilée correspondante (19) espacée des barres de soutien (9) ; une partie au moins de la section de retour (10b) de chaque courroie (10) étant tractée autour de la traverse (7) et étant en contact avec la partie profilée (19) ; la partie profilée (19) maintenant à distance la section de retour (10b) de chaque courroie (10) de la barre de soutien correspondante (9).

6. Dispositif (1) selon l'une quelconque des revendications de 2 à 5, **caractérisé en ce que** la partie de sortie (8b) de chaque transporteur (8) comprend une poulie (11) montée de façon rotative sur la barre de soutien (9) ; le dispositif (1) comprenant de plus un rouleau d'entraînement (12) monté de façon rotative sur la cadre de montage (2) et disposant d'une pluralité de rainures (13) pour recevoir les courroies (10) ; chaque partie d'entrée (8a) étant définie par une rainure réceptrice correspondante (13).

7. Dispositif (1) selon la revendication 1, **caractérisé en ce que** les transporteurs (8) peuvent être configurés en une pluralité de configurations distinctes préétablies en fonction du nombre de transporteurs (8) ayant des axes principaux de développement (A) étant parallèles les uns par rapport aux autres ; les moyens de guidage (20) agissant sur les transporteurs (8) pour positionner de façon sélective les transporteurs (8) dans les configurations préétablies.

8. Dispositif (1) selon la revendication 1, **caractérisé en ce que** chaque canal (34) possède une pluralité de points de stationnement (38) ; chaque point de stationnement (38) définissant une position angulaire d'un transporteur correspondant (8).

9. Dispositif (1) selon la revendication 8, **caractérisé en ce que** les points de stationnement (38) sont substantiellement alignés le long d'un pluralité de lignes de stationnement parallèles (100) substantiellement perpendiculaires à la direction de transport (T) ; chaque ligne de stationnement (100) définissant une configuration de transporteurs (8).

10. Dispositif (1) selon les revendications 8 ou 9, **caractérisé en ce que** chaque point de stationnement (38) est défini par une partie allongée (39) du canal correspondant (34) ; chaque partie allongée (39) se développant principalement le long d'une direction de développement parallèle à la direction de transport (T).

11. Dispositif (1) selon l'une quelconque des revendications précédentes, **caractérisé en ce que** chaque canal (34) est défini par une entaille sur le corps (21).

12. Dispositif (1) selon la revendication 11, **caractérisé en ce que** chaque entaille est définie par une fente débouchante ; le goujon (37) étant au moins en partie inséré dans une fente correspondante.

13. Dispositif (1) selon l'une quelconque des revendications précédentes, **caractérisé en ce que** le corps (21) comprend une plaque (22) ayant une surface de guidage (22a) faisant face aux transporteurs (8) et comprenant les canaux (34).

14. Dispositif (1) selon l'une quelconque des revendications précédentes, **caractérisé en ce que** il comprend des moyens de déplacement (28) opérationnellement associés au corps (21) pour le faire glisser entre une condition initiale et une condition finale.

15. Dispositif (1) selon la revendication 14, **caractérisé en ce que** les moyens de déplacement (28) comprennent un engrenage à crémaillère (29) relié au corps (21), un pignon denté (30) en engrènement avec l'engrenage à crémaillère (29) et un moteur (31) opérationnellement relié au pignon denté (30).

16. Dispositif (1) selon la revendication 13, **caractérisé en ce qu'**il comprend une unité de commande opérationnellement associée aux moyens de déplacement (28) pour entraîner le déplacement coulissant du corps (21) sur le cadre de montage (2).

17. Dispositif (1) selon la revendication 16, **caractérisé en ce que** les moyens de déplacement (28) sont opérationnellement reliés à un rouleau de détection de ralenti (40) ; l'unité de commande comprenant un dispositif de détection opérationnellement associé au rouleau de détection (40) pour détecter la position du rouleau de détection (40); l'unité de commande entraînant le déplacement coulissant du corps (21) selon la position du rouleau de détection (40) détectée par le dispositif de détection.
